# EUROPEAN PATENT APPLICATION

(11) **EP 3 845 584 A1**
(43) Date of publication of application: **07.07.2021**
(21) Application number: 19871903.1
(22) Date of filing: 08.10.2019
(51) Int. Cl.: C08J 9/04, C08J 9/228, C08L 23/06, C08L 23/16, C08L 21/00, C08K 5/54, C08K 5/14, B29C 48/00, B29C 48/09, B29C 48/88

(54) **HIGH-ELASTICITY EXTRUDED FOAM COMPOSITION**

(30) Priority: 08.10.2018 KR 20180119715
(71) Applicant: Lee, Soo Jung, Busan 47732 (KR)
(72) Inventor: Lee, Soo Jung, Busan 47732 (KR)
(74) Representative: Prüfer & Partner mbB Patentanwälte · Rechtsanwälte
(86) International application number: PCT/KR2019/013147
(87) International publication number: WO 2020/076037

(57) **Abstract**

Provided is a composition for a highly elastic extruded foam. The composition includes a peroxide-crosslinkable thermoplastic polymer, an organic peroxide, thermo-expandable microspheres, and a silane coupling agent.

## Description

### Technical Field

The present disclosure relates to a composition for a highly elastic extruded foam, and more specifically to a composition for a highly elastic extruded foam that is highly stable during foaming to reduce the number of defects in the foam product and ensures low permanent compression shrinkage rate and good heat resistance of the foam product.

### Background Art

In general, extruded plastic and rubber foams are produced by the following methods and are used in our daily life.
Method 1: PE is foamed with a physical blowing agent during extrusion. The extruded PE foam products are used for packaging and insulation.
Method 2: PE or EVA is foamed with a chemical blowing agent during extrusion. The extruded PE or EVA foam products are used for packaging and insulation.
Method 3: PE or PP is extruded, crosslinked by an electron beam, and foamed with a physical blowing agent. The extruded PE or PP foam products are used for packaging and insulation.
Method 4: PS is foamed with a physical blowing agent during extrusion and molded by a suitable molding process such as vacuum molding. The extruded PS foam products are used for food packaging such as cup noodle packaging.
Method 5: EPDM rubber containing a chemical blowing agent is extruded, surface-crosslinked by ultra-high frequency (UHF), and foamed in a foaming zone. The extruded EPDM rubber foam products are used as window frame rubber foams for buildings and vehicles and insulation hoses for air conditioner refrigerant pipes.
Method 6: SEBS thermoplastic rubber is extruded in an extruder including a cylinder with a gas inlet while a supercritical gas is injected into the extruder through the gas inlet. The resulting extruded foam products are used as insulation hoses.

However, these methods have many problems. Specifically, Method 1 and Method 2 have the problems that the material is foamed at a high magnification and is not crosslinked, causing high permanent compression shrinkage rate and very low elasticity of the foam products. Thus, the foam products obtained by Method 1 and Method 2 cannot be used in applications where a high force or pressure is applied, limiting their use to packaging and insulation. Method 3 has the advantage of lower permanent compression shrinkage rate than Method 1 and Method 2 but has the disadvantage that an excessive increase in crosslinking density by the electron beam makes it difficult to foam the extrudate, and as a result, a reduction in crosslinking density is inevitably required, which limits the application of the foam products. Method 4 has the disadvantage that PS is not stiff and tends to be brittle due to its characteristics. The foam products obtained by Method 5 are used as window frame rubbers for vehicles and buildings but have a large number of defects because the EPDM rubber is foamed in an open state and the uniformity of its foaming magnification is thus difficult to maintain. A large-size system including an 80-100 m long foaming zone and a large-area factory are required for sufficient foaming and crosslinking, involving considerable costs. A typical window frame rubber for a vehicle is an assembly consisting of a rigid solid framework layer and a foam and is produced by triple extrusion (framework layer + adhesive layer + foam layer) in which the solid framework layer and the adhesive layer are not foamed and only the foam layer is foamed. However, since the solid remains unfoamed but the foam layer is foamed three-dimensionally when foaming is performed in an open state, the product is liable to warp. This warpage can be minimized by controlling the foaming to a minimal level, but since the foam can be only slightly foamed such that its density is 0.6-0.8 g/mm³, it is inevitable to make the foam thin, leading to poor airtightness of the window frame rubber. Method 6 is carried out using simple equipment and has the advantage of good foaming stability, enabling the production of products with uniform dimensions. However, SEBS has limited physical properties and is not crosslinked above a predetermined level, causing poor elastic recovery, high permanent compression shrinkage rate, and limited heat resistance of the foam product. Due to these disadvantages, SEBS cannot be applied to window frame rubbers for vehicles and buildings but is used to produce insulation hoses in static applications. The use of a very expensive extruder in Method 6 makes it difficult to apply Method 6 to purposes other than special purposes. Further, Method 6 has limitations in increasing the foaming magnification of SEBS, making it difficult to lower the specific gravity of the foam products to 0.5g/cc or less.

To solve the above problems, there is a need to develop an extruded foam that has a reduced number of dimensional and other defects due to its good foaming stability, is produced using simple equipment, and has high elasticity, low permanent compression shrinkage rate, and good heat resistance.

### Detailed Description of the Invention

### Means for Solving the Problems

According to one aspect of the present disclosure, there is provided a composition for a highly elastic extruded foam, including a peroxide-crosslinkable thermoplastic polymer, an organic peroxide, thermo-expandable microspheres, and a silane coupling agent.

According to a further aspect of the present disclosure, there is provided a method for producing a highly elastic extruded foam, including: providing a composition including a peroxide-crosslinkable thermoplastic polymer, an organic peroxide, thermo-expandable microspheres, and a silane coupling agent; extruding the composition to obtain an extrudate; and cutting the extrudate into a highly elastic extruded foam.

According to another aspect of the present disclosure, there is provided a window frame rubber produced by extruding the composition.

According to yet another aspect of the present disclosure, there is provided a foam hose produced by extruding the composition.

### Brief Description of the Drawings

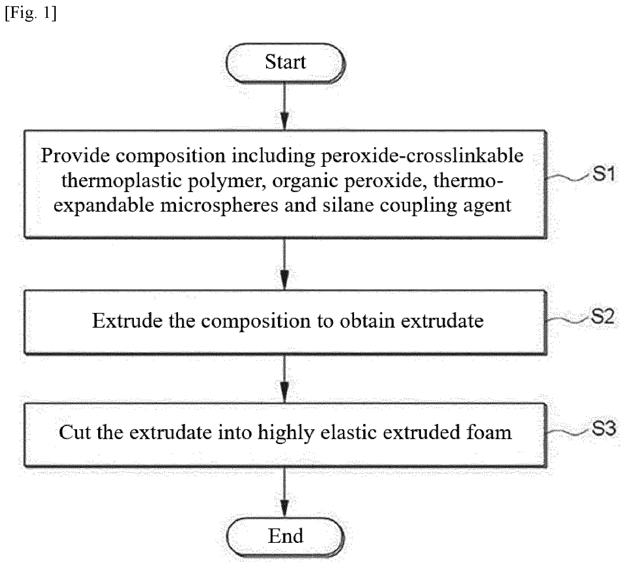

Fig. 1 is a process flow chart showing one embodiment of a method for producing a highly elastic extruded foam.

### Mode for Carrying out the Invention

Various embodiments of the present disclosure will now be described in more detail. The terms used in the present application are merely used to describe particular embodiments, and are not intended to limit the present disclosure. An expression used in the singular encompasses the expression of the plural, unless it has a clearly different meaning in the context. In the present application, it is to be understood that the terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

One aspect of the present disclosure provides a composition for a highly elastic extruded foam.

The composition includes a peroxide-crosslinkable thermoplastic polymer, an organic peroxide, thermo-expandable microspheres, and a silane coupling agent.

The peroxide-crosslinkable thermoplastic polymer may be selected from the group consisting of ethylene-based polymers, chlorinated polyethylene, ethylene-propylene rubbers, thermoplastic elastomers, and mixtures thereof. These peroxide-crosslinkable thermoplastic polymer have physical properties suitable for highly elastic extruded foams in that they can be crosslinked during extrusion, ensuring high elasticity of the foam products.

The ethylene-based polymer may be an ethylene homopolymer or copolymer.

The ethylene homopolymer may be selected from the group consisting of low density polyethylene (LDPE), linear low density polyethylene (LLDPE), ultra-low density polyethylene (ULDPE), very low density polyethylene (VLDPE), medium density polyethylene (MDPE), and high density polyethylene (HDPE).

The ethylene copolymer may be a copolymer of i) ethylene and ii) at least one ethylenically unsaturated monomer selected from the group consisting of C₃-C₁₀ α-olefins, C₁-C₁₂ alkyl esters of unsaturated C₃-C₂₀ monocarboxylic acids, unsaturated C₃-C₂₀ mono- or dicarboxylic acids, anhydrides of unsaturated C₄-C₈ dicarboxylic acids, and vinyl esters of saturated C₂-C₁₈ carboxylic acids or an ionomer of the copolymer.

Preferably, ethylene makes up the largest mole fraction of the ethylene copolymer. Typically, ethylene accounts for about 50 mole% or more of the polymer. More preferably, ethylene accounts for about 60 mole% or more, about 70 mole% or more or about 80 mole% or more of the polymer.

Specific examples of such ethylene copolymers include ethylene vinyl acetate (EVA) copolymers, ethylene butyl acrylate (EBA) copolymers, ethylene methyl acrylate (EMA) copolymers, ethylene ethyl acrylate (EEA) copolymers, ethylene methyl methacrylate (EMMA) copolymers, ethylene butene copolymers (EB-Co), and ethylene octene copolymers (EO-Co).

The ethylene copolymer is preferably a copolymer of ethylene and an α-olefin, which is preferred in terms of high elasticity. The α-olefin refers to an olefin consisting of at least three carbon atoms and having a terminal carbon-carbon double bond. The substantial remainder of the ethylene/α-olefin copolymer except for ethylene includes one or more other comonomers. The comonomers are preferably α-olefins having three or more carbon atoms. The α-olefin is preferably butene, hexene or octene in terms of commercial availability and ease of purchase. For example, the olefin/α-olefin copolymer may be an ethylene/octene copolymer. In this case, the copolymer includes about 80 mole% or more of ethylene and about 10 to about 15 mole%, preferably about 15 to about 20 mole% of octene.

The ethylene/α-olefin copolymer may be a random or block copolymer and specific examples thereof include polyolefin elastomers (POEs) and olefin block copolymers (OBCs). Commercial products for the ethylene/α-olefin copolymer include Engage and Infuse from Dow Chemical, Tafmer from Mitsui, Exact from Exxon Mobile, and LG-POE from LG Chem.

The chlorinated polyethylene resin may be selected from the group consisting of a chlorinated polyethylene homopolymer, a chlorinated copolymer containing i) ethylene and ii) a copolymerizable monomer as copolymerization units, and mixtures thereof.

Specific examples of such chlorinated polyethylene homopolymers include chlorinated high density polyethylene homopolymers, chlorinated low density polyethylene homopolymers, and chlorinated ultra-high density polyethylene homopolymers.

The chlorinated copolymer may be one of i) ethylene and ii) at least one ethylenically unsaturated monomer selected from the group consisting of C₃-C₁₀ α-monoolefins, C₁-C₁₂ alkyl esters of unsaturated C₃-C₂₀ monocarboxylic acids, unsaturated C₃-C₂₀ mono- or dicarboxylic acids, anhydrides of unsaturated C₄-C₈ dicarboxylic acids, and vinyl esters of saturated C₂-C₁₈ carboxylic acids. Examples of such chlorinated copolymers include chlorinated graft copolymers.

Specific examples of suitable chlorinated copolymers include chlorinated ethylene vinyl acetate copolymers, chlorinated ethylene acrylic acid copolymers, chlorinated ethylene methacrylic acid copolymers, chlorinated ethylene methyl acrylate copolymers, chlorinated ethylene methyl methacrylate copolymers, chlorinated ethylene butyl acrylate copolymers, chlorinated ethylene butyl methacrylate copolymers, chlorinated ethylene glycidyl methacrylate copolymers, chlorinated graft copolymers of ethylene and maleic anhydride, and chlorinated copolymers of propylene, butene, 3-methyl-1-pentene or octene and ethylene. Here, the copolymers may be binary copolymers, ternary copolymers or higher order copolymers.

Preferably, the chlorinated polyethylene resin is selected from a chlorinated polyethylene homopolymer, a chlorinated ethylene vinyl acetate copolymer, a chlorinated ethylene butyl acrylate copolymer, a chlorinated ethylene methyl acrylate copolymer, a chlorinated ethylene methyl methacrylate copolymer, a chlorinated ethylene butene copolymer, and a chlorinated ethylene octene copolymer.

The content of chlorine in the chlorinated polyethylene resin may be 30 to 70% by weight, preferably 30 to 50% by weight, based on the total weight of the chlorinated polyethylene resin. If the chlorine content is less than the lower limit defined above, the structure of the chlorinated polyethylene resin becomes similar to that of polyethylene. In this case, the chlorinated polyethylene resin has insufficient rebound resilience and high stiffness, and as a result, it is not suitable for use in the production of a desired foam for outdoor applications. Meanwhile, if the chlorine content exceeds the upper limit defined above, the chlorinated polyethylene resin has excessively high hardness and tends to be brittle, and as a result, it is difficult to process and foam, making the production of a foam impossible.

The propylene-based polymer may be a propylene homopolymer or copolymer. Preferably, the propylene-based polymer is a propylene homopolymer. The propylene copolymer may be a propylene-ethylene copolymer or a propylene-α-olefin copolymer. In the propylene-α-olefin copolymer, the α-olefin may have 4 to 20 carbon atoms. For example, the α-olefin may be 1-butene, 1-pentene, 1-hexene, 4-methyl-1-pentene, 1-heptene, 1-octene, 1-decene, 1-dodecene, 1-tetradecene, 1-hexadecene, or 1-eicosene. These α-olefin may be used alone or as a mixture of two or more thereof.

The ethylene-propylene rubber may be an EPM or EPDM rubber. The EPM rubber is a fully saturated copolymer of ethylene and propylene and the EPDM rubber is a terpolymer of ethylene, propylene, and a small amount of a non-conjugated diene. The diene as a third component may be, for example, 1,4-hexadiene, dicyclopentadiene (DCPD) or 5-ethylidene-norbornene (ENB). The ratio of ethylene to propylene in each of the EPM and EPDM rubbers may vary. The content of ethylene in the polymer may vary between 45 and 75% by weight. When the molecular weight of the rubber product is high, about 25 to about 50 phr of mineral oil may added to the rubber product. The EPM and EPDM rubbers may be vulcanized with peroxides. The vulcanized rubbers are suitable for applications where good high temperature performance and low compression shrinkage rate are required.

The thermoplastic elastomer (thermoplastic rubber) may be selected from the group consisting of styrene block copolymers, including styrene-butadiene-styrene (SBS) block copolymers, styrene-isoprene-styrene (SIS) block copolymers, styrene-ethylene-butadiene-styrene (SEBS) block copolymers, styrene-butylene-butadiene-styrene (SBBS) block copolymers, and styrene-ethylene-propylene-styrene (SEPS) block copolymers, 1,2-polybutadiene (1,2-PB), thermoplastic polyolefin (TPO), thermoplastic vulcanizates (TPVs), and mixtures thereof.

The melt index (MI) of the peroxide-crosslinkable thermoplastic polymer is in the range of 1.0 to 50 g/10 minutes, preferably 1.0 to 30 g/10 minutes, more preferably 2.0 to 25 g/10 minutes, as measured by ASTM D1238 (230 °C, 2.16 kg). The melt index of the peroxide-crosslinkable thermoplastic resin is particularly preferably in the range of 2.0 to 20 g/10 minutes. When a peroxide-crosslinkable thermoplastic resin is melt-kneaded using suitable equipment such as an extruder, a higher melt index of the thermoplastic resin leads to a lower load of the equipment. If the melt index of the peroxide-crosslinkable thermoplastic resin is lower than the lower limit defined above, too high a pressure is applied to a processing machine, causing a severe load in the machine. Further, a very small amount of the composition is extruded per unit time, which is economically disadvantageous. Meanwhile, if the melt index of the peroxide-crosslinkable thermoplastic resin exceeds the upper limit defined above, the viscosity of the composition is low, resulting in an excessively high tackiness of the mixture immediately after passing through an extrusion die. In this case, the shape of the extrudate is not well maintained, making it difficult to mold the extrudate. The composition may optionally further include one or more additives. Also in this case, it is preferable to control the melt index of the composition to the range defined above for the same reason.

According to one embodiment, the thermo-expandable microspheres used in the composition of the present disclosure are polymer particles that encapsulate an expandable hydrocarbon compound therein. The expandable hydrocarbon compound is generally in the form of a powder but is volatilized or thermally decomposed to generate a gas above a predetermined temperature, forming pores in the thermo-expandable microspheres. The polymer expands to form shells. The polymer is not broken due to its high softness and elasticity. If the thermo-expandable microspheres overheat and rupture during expansion, a gas escapes from the thermo-expandable microspheres during molding of the composition and is finally lost, with the result that little or no expansion occurs. Excellent surface characteristics can be attained when the polymer is not broken.

The thermo-expandable microspheres are expanded by heating during molding of the composition. An expanded molded product obtained from the composition including the thermo-expandable microspheres can be formed as a foamed body.

Preferably, the boiling point of the expandable hydrocarbon compound is not higher than the softening temperature of the shells, for example, about 100 °C or less, at which the shell-forming polymer is not dissolved in the expandable hydrocarbon compound. A liquid material with low boiling point, also called a volatile blowing agent, is usually used as the expandable hydrocarbon compound. Alternatively, a solid material capable of generating a gas when thermally decomposed may be used as the expandable hydrocarbon compound.

Examples of suitable liquid materials include C₃-C₈ straight-chain aliphatic hydrocarbons and their fluorinated products, C₃-C₈ branched aliphatic hydrocarbons and their fluorinated products, C₃-C₈ straight-chain alicyclic hydrocarbons and their fluorinated products, ether compounds having C₂-C₈ hydrocarbon groups, or the ether compounds in which some hydrogen atoms of the hydrocarbon groups are substituted with fluorine atoms. Specific examples of such liquid materials include propane, cyclopropane, butane, cyclobutane, isobutane, pentane, cyclopentane, neopentane, isopentane, hexane, cyclohexane, 2-methylpentane, 2,2-dimethylbutane, heptane, cycloheptane, octane, cyclooctane, methylheptanes, trimethylpentane, 1-pentene, 1-hexene, and hydrofluoroethers such as C₃F₇OCH₃, C₄F₉OCH₃, and C₄F₉OC₂H₅. These liquid materials may be used alone or as a mixture of two or more thereof. The liquid material is preferably a hydrocarbon having a boiling point lower than 60 °C at atmospheric pressure. Isobutane is preferred as the liquid material in the hollow microspheres. The solid material may be azobisisobutyronitrile (AIBN) that is thermally decomposed into a gas.

The content of the expandable hydrocarbon compound encapsulated in the thermo-expandable microspheres is not particularly limited and may vary depending on the intended use. For example, the content of the encapsulated expandable hydrocarbon compound may be about 0.5 to about 15% by weight, preferably about 1 to about 10% by weight, based on the total weight of the thermo-expandable microspheres. The thermo-expandable microspheres may generally be prepared by mechanically dispersing a mixture containing a polymerizable monomer, a blowing agent and the like in an incompatible liquid such as water, followed by suspension polymerization of the monomer droplets.

The thermo-expandable microspheres used in the composition may have an average particle diameter in the range of about 5 to about 60 µm, for example, about 10 to about 50 µm or about 20 to about 35 µm, before expansion. Within this range, the thermo-expandable microspheres form shells having an appropriate thickness without rupture during expansion and their thermal expansion behavior can be promoted. The expansion start temperature (Tₛₜₐᵣₜ) and maximum expansion temperature (Tₘₐₓ) of the thermo-expandable microspheres can be determined depending on the boiling point of the expandable hydrocarbon compound and the glass transition temperature (T_{g}) of the shell-forming polymer.

The polymer capable of forming a shell, *i.e.,* the shell-forming polymer, upon expansion may basically be any thermoplastic resin that can be softened to expand the gas therein at the expansion start temperature. Specifically, the shell-forming polymer may be an acrylic resin, a vinylidene chloride resin, an acrylonitrile resin, an ABS resin, polyethylene, polyethylene terephthalate, polypropylene, polystyrene, a vinyl chloride resin, an acetal resin, a cellulose ester, cellulose acetate, a fluorinated resin, polymethylpentene or a mixture thereof but is not limited thereto. The shell-forming polymer may be, for example, a polymer or copolymer including at least one monomer selected from the group consisting of, but not limited to, acrylonitrile, methacrylonitrile, methyl methacrylate, methyl acrylate, ethyl acrylate, propyl acrylate, n-butyl acrylate, isobutyl acrylate, t-butyl acrylate, 2-ethylhexyl acrylate, n-octyl acrylate, lauryl acrylate, stearyl acrylate, 2-hydroxyethyl acrylate, polyethylene glycol acrylate, methoxypolyethylene glycol acrylate, glycidyl acrylate, dimethylaminoethyl acrylate, diethylaminoethyl acrylate, vinylidene chloride, butadiene, styrene, p- or m-methylstyrene, p- or m-ethylstyrene, p- or m-chlorostyrene, p- or m-chloromethylstyrene, styrene sulfonic acid, p- or m-t-butoxystyrene, vinyl acetate, vinyl propionate, vinyl butyrate, vinyl ether, allyl butyl ether, allyl glycidyl ether, unsaturated carboxylic acids, including (meth)acrylic acid or maleic acid, and alkyl (meth)acrylamides. The polymer can be suitably selected according to the intended purpose such as its softening temperature, heat resistance, and chemical resistance. For example, the polymer may be a copolymer including vinylidene chloride that has excellent gas barrier properties. Alternatively, the polymer may be a copolymer including at least about 80% or more by weight of a nitrile monomer that is excellent in heat resistance and chemical resistance. The shells of the thermo-expandable microspheres are composed of an acrylic copolymer (*i.e.* an acrylonitrile copolymer) of a nitrile monomer and a (meth)acrylate monomer as major components, which is preferable for heat resistance of the composition.

The composition may include 0.5 to 20 parts by weight, preferably 3 to 15 parts by weight, more preferably 3 to 10 parts by weight of the thermo-expandable microspheres, based on 100 parts by weight of the peroxide-crosslinkable thermoplastic resin. If the content of the thermo-expandable microspheres is less than the lower limit defined above, sufficient foaming cannot be achieved. Meanwhile, if the content of the thermo-expandable microspheres exceeds the upper limit defined above, excessive foaming may occur, and as a result, the strength of a final molded foam may be lowered, causing problems in use.

The composition may further include one or more additives selected from the group consisting of metal oxides and antioxidants that are commonly used for the production of a foamed body to assist in improving the processing properties and to improve the physical properties of the foamed body.

The additives may be used in an amount of 0.01 to 5 parts by weight, based on 100 parts by weight of the peroxide-crosslinkable thermoplastic polymer. The metal oxide can be used to improve the physical properties of a foamed body and examples thereof include zinc oxide, titanium oxide, cadmium oxide, magnesium oxide, mercury oxide, tin oxide, lead oxide, and calcium oxide. The metal oxide may be used in an amount of 1 to 4 parts by weight, based on 100 parts by weight of the thermoplastic polymer. Examples of the antioxidants include Sonnoc, butylated hydroxy toluene (BHT), and Songnox 1076 (octadecyl-3,5-di-tert-butyl-hydroxyhydrocinnamate). The antioxidant may be used in an amount of 0.25 to 2 parts by weight, based on 100 parts by weight of the thermoplastic polymer.

Early crosslinking of the composition prevents foaming of the polymer. For efficient foaming of the polymer, it is preferable that the expansion start temperature (Tₛₜₐᵣₜ) of the thermo-expandable microspheres is equal to or lower than the 1 minute half-life temperature of the organic peroxide crosslinking agent.

The organic peroxide crosslinking agent has a 1 minute half-life temperature of 130 to 180 °C. Specific examples of such organic peroxide crosslinking agents include t-butylperoxyisopropyl carbonate, t-butyl peroxylaurylate, t-butyl peroxyacetate, di-t-butyl peroxyphthalate, t-dibutyl peroxy maleic acid, cyclohexanone peroxide, t-butylcumyl peroxide, t-butyl hydroperoxide, t-butyl peroxybenzoate, dicumyl peroxide, 1,3-bis(t-butylperoxyisopropyl)benzene, methyl ethyl ketone peroxide, 2,5-dimethyl-2,5-di(benzoyloxy)hexane, 2,5-dimethyl-2,5-di(t-butylperoxy)hexane, di-t-butyl peroxide, 2,5-dimethyl-2,5-(t-butylperoxy)-3-hexane, n-butyl-4,4-bis(t-butylperoxy)valerate, and α,α'-bis(t-butylperoxy)diisopropylbenzene.

According to one embodiment, the composition of the present disclosure may include 0.02 to 4 parts by weight, preferably 0.02 to 3 parts by weight, more preferably 0.05 to 1.5 parts by weight of the organic peroxide crosslinking agent, based on 100 parts by weight of the peroxide-crosslinkable thermoplastic polymer. If the organic peroxide crosslinking agent is used in an amount of less than 0.02 parts by weight, sufficient crosslinking may not be induced, resulting in poor wear resistance of a final molded foam. Meanwhile, if the organic peroxide crosslinking agent is used in an amount exceeding 4 parts by weight, excessive crosslinking may be induced, resulting in a remarkable increase in hardness.

The silane coupling agent present in the composition is grafted onto the peroxide-crosslinkable thermoplastic polymer in the presence of a radical initiator present in the composition and allows crosslinking of the peroxide-crosslinkable thermoplastic polymer in the presence of water. Due to the presence of the silane coupling agent mixed in the composition, the product obtained by subsequent extrusion of the composition can be crosslinked during long-term storage at room temperature, by placing in a hot and humid environment such as a sauna or when heated in water. Alternatively, the product obtained by extrusion of the composition can absorb water from air and be crosslinked in nature over time.

The silane coupling agent is chemically bound to the thermoplastic polymer to form a silane grafted copolymer and serves to provide functional groups for crosslinking. The silane coupling agent may be an alkoxysilane compound. Examples of suitable alkoxysilane compounds include vinyltrimethoxysilane, vinyltriethoxysilane, tetraethoxysilane, tetra-n-propoxysilane, methyltriethoxysilane, methyltrimethoxysilane, methyltri(2-methoxyethoxy)silane, 3-methacryloyloxypropyltrimethoxysilane, 3-mercaptopropyltrimethoxysilane, 3-aminopropyltrimethoxysilane, and 3-glycidyloxypropyltrimethoxysilane. These silane coupling agents may be used alone or in combination of two or more thereof.

The degree of crosslinking may be adjusted depending on the amount of the silane coupling agent in the composition.

According to one embodiment, the content of the silane coupling agent in the composition of the present disclosure is 1.5 to 15 parts by weight, preferably 2.5 to 12 parts by weight, more preferably from 3 to 12 parts by weight, based on 100 parts by weight of the peroxide-crosslinkable thermoplastic polymer. If the silane coupling agent is present in an amount of less than the lower limit defined above, the peroxide-crosslinkable thermoplastic polymer may not be effectively crosslinked, resulting in insufficient heat resistance, and as a result, the product tends to aggregate at high temperatures in summer. Meanwhile, if the silane coupling agent is present in an amount exceeding the upper limit defined above, the crosslinking density does not increase above a predetermined level, leading to a rise in cost.

The organic peroxide crosslinking agent can serve to chemically graft silane coupling agent onto the thermoplastic polymer.

The composition may optionally further include a catalyst to shorten the time required for crosslinking in water after the grafting step. Examples of suitable catalysts include dibutyltin dilaurate, dibutyltin dimaleate, dibutyltin diacetate, dioctyltin maleate, dibutyltin diacetate, dibutyltin dioctoate, tetrabutyl titanate, hexylamine, dibutylamine acetate, stannous, stannous octoate, lead naphthenate, zinc caprylate, and cobalt naphthenate. The use of dibutyltin dilaurate is preferred.

The catalyst may be present in an amount of 1 part by weight or less, for example, 0.05 to 1 part by weight, preferably 0.05 to 0.5 parts by weight, based on 100 parts by weight of the polymer. The presence of the catalyst in an amount of less than the lower limit defined above leads to slow crosslinking, and as a result, more energy and time is required for crosslinking. Meanwhile, the presence of the catalyst in an amount exceeding the upper limit defined above does not contribute to further improvement of crosslinking rate.

When the composition is extruded into a foam in an extruder, the thermo-expandable microspheres expand in the extruder and are discharged in the expanded state from the extruder. Accordingly, the cross-sectional shape and dimensions of the extrudate are almost the same as those of a die of the extruder, achieving high extrusion precision.

The extrudate of the composition is cut to a predetermined length and stored at room temperature or in a hot sauna where water crosslinking or silane crosslinking occurs. Since the crosslinking density is controlled by varying the amount of the silane coupling agent, a high degree of crosslinking of the foam product can be achieved, which is effective in maximizing the elasticity and recovery of the foam product.

According to one embodiment, the composition of the present disclosure may be doubly or triply coextruded to produce a window frame rubber for a vehicle consisting of a rigid solid framework layer and a foam. In this embodiment, the foam expands before extrusion and does not expand again after extrusion. Accordingly, the shape of the foam is easy to maintain, with the result that the foam can be made denser and thicker by increasing its expansion rate, thus being effective in diversifying the design of the window frame rubber.

A further aspect of the present disclosure provides a method for producing a highly elastic extruded foam. Fig. 1 is a process flow chart showing one embodiment of a method for producing a highly elastic extruded foam. Referring to Fig. 1, in step S1, a composition including a peroxide-crosslinkable thermoplastic polymer, an organic peroxide, thermo-expandable microspheres, and a silane coupling agent is provided. Details of each component are the same as those described above.

In step S2, the composition is extruded to obtain an extrudate. The extrusion may be performed with a suitable extruder, for example, a Buss kneader, a single screw extruder or a twin screw extruder. Various products can be manufactured by changing the processing conditions of the extruder, such as screw configuration, temperature setting, screw rotation speed, and extrusion output.

The mixture is introduced through a hopper of the extruder, transferred by a screw, and melted and mixed in a cylinder of the extruder. The cylinder is heated to such a temperature that the molten mixture is suitably flowable and sufficient foaming is achieved. It is preferred that the temperature of the cylinder is controlled to a temperature equal to or higher than the melting point of the polymer, a temperature equal to or higher than the Tₛₜₐᵣₜ of the thermo-expandable microspheres, and a temperature equal to or lower than the Tₘₐₓ of the thermo-expandable microspheres. If the temperature of the cylinder exceeds Tₘₐₓ, the thermo-expandable microspheres may be broken into pieces by the rotating extruder screw, and as a result, the component flowing out of the thermo-expandable microspheres may change the color of a final product and may reduce the degree of foaming.

The temperature of the cylinder may vary depending on the kind of the polymer. The screw rotation speed and the extrusion output can be appropriately controlled depending on the specific gravity and shape of the foamed extrudate. The processing conditions may be varied as needed. For example, the cylinder of the extruder may be maintained at a temperature of 120 to 170 °C and a nozzle of the extruder may be maintained at a temperature of 150 to 200 °C.

For smooth extrusion and foaming of the mixture of the polymer and the thermo-expandable microspheres, it is preferable that the extrusion temperature is higher than the expansion start temperature of the thermo-expandable microspheres.

The expansion start temperature of the thermo-expandable microspheres may be about 100 to about 150 °C, for example, about 110 to about 140 °C. The maximum expansion temperature of the thermo-expandable microspheres may be about 150 to about 250 °C, for example, about 180 to about 220 °C. The expansion start temperature and the maximum expansion temperature can be appropriately selected according to the intended applications.

The thermo-expandable microspheres may be expanded about 10- to about 100-fold, for example, about 30- to about 60-fold, relative to their initial volume at the maximum expansion temperature. When the composition including the thermo-expandable microspheres is heated, the thermo-expandable microspheres are expanded and the resulting molded product includes the expanded thermo-expandable microspheres. The volume of the thermo-expandable microspheres in the molded product may be about 10 to about 50 times, for example, about 20 to about 40 times, larger than that before expansion.

The expanded thermo-expandable microspheres are ultralight hollow microspheres, contributing to a reduction in the weight of a final product. In addition, the inherent high elasticity of the expanded thermo-expandable microspheres can maintain and enhance the mechanical strength of a final product. Unlike general blowing agents, the thermo-expandable microspheres form microscopic closed cells having a uniform size after expansion, resulting in an improvement in the surface characteristics of a final product. The elasticity of the closed cells can also contribute to the prevention of shrinkage of a final product.

Since the extrudate is expanded by the thermo-expandable microspheres and is discharged in the expanded state, the cross-sectional shape and dimensions of the extrudate are almost the same as those of a die of the extruder. In addition, crosslinking of the peroxide-crosslinkable thermoplastic polymer occurs during extrusion, ensuring superior heat resistance and high compression recovery rate of the extrudate.

The peroxide-crosslinkable thermoplastic polymer can be homogenized with the thermo-expandable microspheres during extrusion. The peroxide-crosslinkable thermoplastic polymer is crosslinked by the organic peroxide crosslinking agent, and at the same time, the silane coupling agent is grafted onto the peroxide-crosslinkable thermoplastic polymer. In addition, the expansion of the thermo-expandable microspheres ensures excellent surface characteristics of the foam.

In step S3, the extrudate is cut into a highly elastic extruded foam. For example, the extrudate may be cooled with water and sent to a conveyor for cutting.

The composition can be extruded and cut to produce a foamed molded foam in the form of an intermediate or final product.

In one embodiment, the composition may be extruded and cut into a final product in the form of a window frame rubber for a vehicle or building or a foam hose for insulation.

The method may optionally further include (S4) crosslinking the highly elastic extruded foam in the presence of water. When the extruded foam is exposed to a humid (hot water) environment, the presence of the silane coupling agent grafted onto the polymer during extrusion in step S2 ensures good heat resistance of the final product after completion of the crosslinking. The highly elastic extruded foam may be water-crosslinked in nature or in a humid environment. For example, even when exposed to general air conditions at room temperature, the extruded foam may undergo water crosslinking by moisture present in air. That is, a high degree of crosslinking of the extruded foam can be achieved naturally during transport and storage. It is to be understood that more rapid water crosslinking is enabled in a hot and humid environment like in a sauna facility.

In conclusion, the method of the present disclosure enables the production of an extruded foam having a high degree of crosslinking by a single extrusion process without the need for expensive and complex equipment. The extruded foam thus produced is highly elastic and has low permanent compression shrinkage rate. Due to these advantages, the extruded foam can be used in applications where a force or pressure is applied. Since the crosslinking density is controlled by varying the amount of the silane coupling agent, a high degree of crosslinking of the extruded foam can be achieved. Therefore, even when the density of the foam product is lowered (for example, ≤ 0.5 g/cc) by excessive foaming, high dimensional stability and heat resistance of the foam product are maintained.

The present disclosure will be more specifically explained with reference to the following examples. However, these examples are provided for ease of explanation and are not intended to limit the spirit of the present disclosure as defined in the accompanying claims.

### <EXAMPLES>

Ethylene Copolymer-1: Elvaloy AC1330 (Dupont, Ethylene Methyl Acrylate (BA30%, MI 3.0))
Ethylene Copolymer-2: Engage 8200 (DOW, Ethylene-Octene Copolymer, Density 0.870 g/cc, MI 5.0)
Ethylene Propylene Rubber-1: Vistalon 2504 (Exxon, Ethylene 58%, ENB 4.7%, ML₁₊₄ (125 °C) 25)
Thermo Plastic Rubber-1: Tuftec H1052 (Asahi Kasei, SEBS, Styrene 20%, MI (230 °C, 2.16 kg) 13)
Peroxide-1: DCP (dicumyl peroxide)
TEMS-1: Expancel 930 DU 120 (Akzo Nobel, Tₛₜₐᵣₜ: 122-132 °C, Tₘₐₓ: 191-204 °C)
Blowing Agent-1: OBSH (Dongjin Semichem, decomposition temperature 150 °C)
Silane Coupling Agenet-1: Silquest A-171 (Momentive, Vinyltrimethoxysilane) Dibutyltin laurate (DBTL): SONGWON Industrial Co., Ltd.

Compositions were prepared as shown in Table 1. Each of the compositions was extruded through a die (outer diameter 30 mm, inner diameter 20 mm) of an extruder (L/D = 30/1) with a cylinder (diameter 40 mm, temperature 150 °C) and a nozzle (temperature 170 °C). The extrudate was cooled with water at 40 °C, sent to a conveyor, and cut into an extruded foam hose having an outer diameter of 30 mm, an inner diameter of 20 mm, and a length of 100 cm. The foam hose was crosslinked by water in a sauna at a temperature of 60° C and a humidity of 80% for 24 h and various tests were conducted on the crosslinked hose.

**<Table 1>**

| | Compa rative Exampl e1 | Compa rative Exampl e2 | Compa rative Exampl e3 | Compa rative Exampl e4 | Compa rative Exampl e5 | Compa rative Exampl e6 | Exam ple 1 | Exam ple 2 | Exam ple 3 | Exam ple 4 | Exam ple 5 | Compa rative Exampl e7 | Compa rative Exampl e8 | Exam ple 6 | Exam ple 7 |
|---|---|---|---|---|---|---|---|---|---|---|---|---|---|---|---|
| Ethylene Copolymer-1 | 100 | | | | 100 | 100 | 100 | 100 | | | | 100 | 100 | 50 | |
| Ethylene Copolymer-2 | | 100 | | | | | | | 100 | | | | | | |
| Ethylene Propylene Rubber-1 | | | 100 | | | | | | | 100 | | | | 50 | 50 |
| Thermo Plastic Rubber-1 | | | | 100 | | | | | | | 100 | | | | 50 |
| Peroxide-1 | | | | | 0.3 | 0.3 | 0.3 | 0.3 | 0.3 | 0.3 | 0.3 | 0.3 | 0.3 | 0.3 | 0.3 |
| TEMS-1 | 5.0 | 5.0 | 5.0 | 5.0 | 5.0 | 5.0 | 5.0 | 5.0 | 5.0 | 5.0 | 5.0 | | 5.0 | 5.0 | 5.0 |
| Blowing Agent-1 | | | | | | | | | | | | 5.0 | | | |
| Silane Coupling Agent-1 | | | | | 1.0 | 1.0 | 3.0 | 10.0 | 5.0 | 5.0 | 5.0 | 5.0 | | 5.0 | 5.0 |
| DBTL | | | | | 0.1 | 0.1 | 0.1 | 0.1 | 0.1 | 0.1 | 0.1 | 0.1 | | 0.1 | 0.1 |
| | | | | | | | | | | | | | | | |
| Foamed state | Good | Good | Good | Good | Good | Good | Good | Good | Good | Good | Good | Poor | Good | Good | Poor |
| Foam density (g/cm³) | 0.30 | 0.28 | 0.28 | 0.30 | 0.30 | 0.30 | 0.30 | 0.30 | 0.28 | 0.28 | 0.30 | 0.80 | 0.30 | 0.29 | 0.29 |
| Hardness (Shore C) | 38 | 33 | 28 | 33 | 40 | 40 | 40 | 40 | 35 | 30 | 35 | 65 | | 35 | 33 |
| Static compression recovery rate (%) | 15 | 20 | 10 | 60 | 30 | 50 | 81 | 90 | 87 | 92 | 90 | | 17 | 90 | 91 |
| Dynamic compression recovery rate (%) | 17 | 23 | 11 | 70 | 33 | 52 | 85 | 93 | 90 | 95 | 92 | | 20 | 94 | 93 |
| Heat resistance compression recovery rate (%) | 0 | 0 | 0 | 30 | 5 | 30 | 71 | 80 | 75 | 87 | 81 | | 3 | 85 | 86 |
| Suitability of highly elastic extruded foam | Unsuita ble | Unsuita ble | Unsuita ble | Unsuita ble | Unsuita ble | Unsuita ble | Suita ble | Suita ble | Suita ble | Suita ble | Suita ble | Unsuita ble | Unsuita ble | Suita ble | Suita ble |

- The foamed state was determined by visual observation.
- The foam hose was judged to be "good" when the foam density was < 0.70 and "unsuitable" when the foam density was ≥ 0.70.
- The foam hose was judged to be "suitable" when the Shore C hardness was ≤ 50 and "unsuitable" when the Shore C hardness was > 50.
- Static compression recovery rate: Each of the foam hoses (outer diameter 30 mm, inner diameter 20 mm) was cut to a length of 30 mm, placed in an ASTM D395 tester, and compressed such that the inner diameter was reduced from 20 mm to zero. After storage at 23 °C for 7 days, the hose was taken out of the tester. The recovery of the inner diameter after 30 min was expressed in percent (%) relative to the initial inner diameter. The hose was judged to be "suitable" when the static compression recovery rate was ≥ 80%.
- Dynamic compression recovery rate: Each of the foam hoses (outer diameter 30 mm, inner diameter 20 mm) was cut to a length of 30 mm. The hose was fixed to a lower fixed plate of a device whose upper plate is movable up and down. The upper plate was allowed to move 60 times per minute such that the inner diameter was zero in the radial direction. The recovery of the inner diameter after 300,000 movements of the upper plate was expressed in percent (%) relative to the initial inner diameter. The hose was judged to be "suitable" when the dynamic compression recovery rate was ≥ 80%.
- The heat resistance compression recovery rate was measured in the same manner as the method for measuring the static compression recovery rate, except that the hose was stored at 70 °C for 7 days. The hose was judged to be "suitable" when the heat resistance compression recovery rate was ≥ 70%.

### <Comparative Example 9>

Thermo Plastic Rubber-1 (Tuftec H1052) was extruded in an extruder with a cylinder having a gas inlet. The extrudate was foamed with a supercritical gas injected through the gas inlet to obtain an extruded foam (outer diameter 30 mm, inner diameter 20 mm). The extruded foam was cut to a length of 30 mm. The foam was tested by the methods described above. The foam was found to have a static compression recovery rate of 58%, a dynamic compression recovery rate of 65%, and a heat resistance compression recovery rate of 30%. The foam was unsuitable for use as a highly elastic extruded foam.

## Claims

1. A composition for a highly elastic extruded foam, comprising a peroxide-crosslinkable thermoplastic polymer, an organic peroxide, thermo-expandable microspheres, and a silane coupling agent.

2. The composition according to claim 1, wherein the peroxide-crosslinkable thermoplastic polymer is selected from the group consisting of ethylene-based polymers, chlorinated polyethylene, ethylene-propylene rubbers, thermoplastic elastomers, and mixtures thereof.

3. The composition according to claim 2, wherein the ethylene-based polymer is an ethylene homopolymer or ethylene copolymer.

4. The composition according to claim 2, wherein the ethylene-propylene rubber is an EPM rubber or EPDM rubber.

5. The composition according to claim 2, wherein the thermoplastic elastomer is selected from the group consisting of styrene-butadiene-styrene (SBS) block copolymers, styrene-isoprene-styrene (SIS) block copolymers, styrene-ethylene-butadiene-styrene (SEBS) block copolymers, styrene-butylene-butadiene-styrene (SBBS) block copolymers, and styrene-ethylene-propylene-styrene (SEPS) block copolymers, 1,2-polybutadiene (1,2-PB), thermoplastic polyolefin (TPO), thermoplastic vulcanizates (TPVs), and mixtures thereof.

6. The composition according to claim 1, wherein the expansion start temperature (Tₛₜₐᵣₜ) of the thermo-expandable microspheres is equal to or lower than the 1 minute half-life temperature of the organic peroxide crosslinking agent.

7. The composition according to claim 1, wherein the content of the thermo-expandable microspheres is 0.5 to 20 parts by weight, based on 100 parts by weight of the peroxide-crosslinkable thermoplastic polymer.

8. The composition according to claim 1, wherein the silane coupling agent is an alkoxysilane compound.

9. The composition according to claim 1, wherein the content of the silane coupling agent is 1.5 to 15 parts by weight, based on 100 parts by weight of the peroxide-crosslinkable thermoplastic polymer.

10. The composition according to claim 1, further comprising a catalyst to promote water crosslinking.

11. The composition according to claim 1, wherein the catalyst is present in an amount of 0.05 to 1 part by weight, based on 100 parts by weight of the peroxide-crosslinkable thermoplastic polymer.

12. A method for producing a highly elastic extruded foam, comprising:
providing a composition comprising a peroxide-crosslinkable thermoplastic polymer, an organic peroxide, thermo-expandable microspheres, and a silane coupling agent;
extruding the composition to obtain an extrudate; and cutting the extrudate into a highly elastic extruded foam.

13. The method according to claim 12, wherein the composition is extruded in an extruder comprising a cylinder whose temperature is controlled between a temperature equal to or higher than the melting point of the polymer and a temperature equal to or higher than the Tₛₜₐᵣₜ of the thermo-expandable microspheres.

14. The method according to claim 12, further comprising crosslinking the highly elastic extruded foam in the presence of water.

15. The method according to claim 12, wherein the highly elastic extruded foam is water-crosslinked in nature or in a humid environment.

16. A window frame rubber produced by extruding the composition according to any one of claims 1 to 12.

17. A foam hose produced by extruding the composition according to any one of claims 1 to 12.
